Europäisches Patentamt

European Patent Office

Office européen des brevets

(19)

(11) Numéro de publication : **0 462 889 B1**

(12) **FASCICULE DE BREVET EUROPEEN**

(45) Date de publication du fascicule du brevet :
**30.11.94 Bulletin 94/48**

(51) Int. Cl.$^5$ : **H01M 4/52, C01G 53/00**

(21) Numéro de dépôt : **91401640.7**

(22) Date de dépôt : **18.06.91**

(54) **Procédé de préparation d'une poudre d'hydroxydes métalliques et poudre obtenue par ce procédé.**

(30) Priorité : **18.06.90 FR 9007583**

(43) Date de publication de la demande :
**27.12.91 Bulletin 91/52**

(45) Mention de la délivrance du brevet :
**30.11.94 Bulletin 94/48**

(84) Etats contractants désignés :
**AT BE CH DE DK ES FR GB GR IT LI LU NL SE**

(56) Documents cités :
**EP-A- 0 130 627
EP-A- 0 353 837
US-A- 3 675 904
US-A- 4 472 063
PATENT ABSTRACTS OF JAPAN vol. 14, no.
131 (C-700)(4074) March 13, 1990 & JP-A-02 006
340 (KANSAI SHOKUBAI KAGAKU ) January
10, 1990
PATENT ABSTRACTS OF JAPAN vol. 12, no.
108 (E-597)(2955) April 7, 1988 & JP-A-62 237
667 (YUSA BATTERY ) October 17, 1987
PATENT ABSTRACTS OF JAPAN vol. 11, no.
267 (C-443)(2714) August 28, 1987 & JP-A-62 68
532 (FUJI SEITO ) March 28, 1987**

(56) Documents cités :
**PATENT ABSTRACTS OF JAPAN vol. 10, no.
128 (C-345)(2185) May 13, 1986 & JP-A-60 255
632 (SUMITOMO KINZOKU KOUZAN ) December 17, 1985
CHEMICAL ABSTRACTS, vol. 112, no. 20, May
14, 1990, Columbus, Ohio, US; abstract no.
187856 E, M.E. UNATES ET AL. 'The influence
of foreign ions addition on the electrochemical
behavior of the nickel hydroxide electrode. '
page 573 ;**

(73) Titulaire : **SAFT (inscrite au Registre du
Commerce sous le numéro 343 588 737)
156 avenue de Metz
F-93230 Romainville (FR)**

(72) Inventeur : **Blanchard, Philippe
26 Chemin Lafon
F-33160 St Medard en Jalles (FR)**
Inventeur : **Klein, Jean Paul, c/o Institut de
Techn. Chimiques
6, rue Jean Massé
F-69190 Saint Fons (FR)**

(74) Mandataire : **Weinmiller, Jürgen et al
Lennéstrasse 9
Postfach 24
D-82336 Feldafing (DE)**

**Description**

La présente invention concerne un procédé de préparation d'une poudre d'hydroxydes métalliques et une poudre obtenue par ce procédé, destinée à être utilisée comme matière active dans une batterie d'accumulateurs à électrolyte alcalin.

De manière générale, lorsque l'on met en oeuvre des poudres dans des procédés industriels, il est recommandé que celles-ci soient constituées de particules ayant une haute densité apparente, une granulométrie centrée et un bon pouvoir de coulabilité, ce dernier pouvant être quantifié par la mesure de l'angle de repos. La densité apparente est définie dans le "Metals Handbook", vol 7, p.274 (1984), "The American Society for metals". La mesure de l'angle de repos est décrite dans le "Metals Handbook", vol 7, p.282 (1984). Lorsque ces trois caractéristiques peuvent être obtenues, elles permettent de minimiser les problèmes d'hétérogénéité et de reproductibilité lors d'un remplissage volumique, et d'éviter au mieux la formation de poussières.

Lorsqu'il s'agit de poudres d'hydroxydes ou de sels métalliques, le procédé de fabrication le plus répandu pour arriver à ces caractéristiques est la granulation; l'atomisation en est un exemple type. Ce procédé, par ailleurs très efficace, nécessite l'utilisation d'adjuvants organiques à forte teneur en carbone pour lier entre elles les fines particules. Malheureusement la présence de ces adjuvants a pour effet de rendre les poudres impropres à une utilisation dans les batteries d'accumulateurs à électrolyte alcalin, car la décomposition des chaînes carbonées conduit à la formation de carbonates qui entraînent la détérioration des performances électriques des batteries.

Pour préparer l'hydroxyde de nickel mis en oeuvre dans ces batteries, on procède habituellement en effectuant un contact rapide d'une solution d'un sel de nickel et d'une base, par exemple la soude; le produit obtenu se présente sous la forme de très fines particules qui sont le reflet d'un processus de nucléation très intense engendré par une forte sursaturation. L'hydroxyde de nickel est difficile à séparer du milieu réactionnel et, du fait de la finesse des particules, il est nécessaire d'accomplir de longues filtrations avant de pouvoir le sécher puis le broyer afin d'aboutir à une poudre. De plus cette dernière ne présente pas les trois caractéristiques rappelées plus haut : haute densité apparente, granulométrie et coulabilité contrôlées.

On connaît par ailleurs par la demande de brevet japonais JP-A 63 91120 un procédé de préparation d'une poudre d'hydroxyde de nickel selon lequel on introduit dans un réacteur un sel de nickel, une base forte, et un sel d'ammonium, la température de la réaction étant comprise entre 20°C et 80°C et la valeur du pH du milieu réactionnel étant comprise entre 9 et 12.

On constate que, si l'on met en oeuvre le procédé tel que décrit dans ce document, l'hydroxyde de nickel se présente :
- soit sous la forme de particules de forme irrégulière qu'il faut ultérieurement broyer et il en résulte une poudre dont les grains ont une densité trop faible,
- soit sous la forme de particules bien sphériques de 15 et 20 μm, mais dont la porosité interne est importante, ce qui conduit encore à une densité trop faible.

En outre l'hydroxyde décrit ne peut être utilisé tel quel dans un accumulateur, car il ne contient pas un certain nombre d'additifs nécessaires à son bon fonctionnement.

La présente invention a pour but de mettre en oeuvre un procédé de fabrication d'un hydroxyde qui présente une densité apparente améliorée, une coulabilité et une granulométrie contrôlées et qui soit directement utilisable comme matière active dans une batterie d'accumulateurs à électrolyte alcalin, sans qu'il soit nécessaire d'effectuer un broyage.

La présente invention a pour objet un procédé de préparation d'une poudre d'hydroxydes métalliques à base d'hydroxyde de nickel pour électrode de générateur électrochimique à électrolyte alcalin, caractérisé par le fait que :
- on introduit dans un réacteur, simultanément et de manière continue :
  . une solution de nitrates ou de sulfates de nickel, de cobalt, de cadmium et/ou de zinc, la proportion de cobalt étant comprise entre 1% et 8% en poids par rapport à l'ensemble des métaux présents dans ladite solution, la proportion de cadmium et/ou de zinc étant de l'ordre de 3% à 10%,
  . un sel d'ammonium, de manière que le rapport ions ammonium/ions nickel soit compris entre 0,3 et 0,6,
  . une base forte de manière que la valeur du pH soit stabilisée à la valeur de 9,2 ± 0,1, la température du réacteur étant maintenue à une valeur supérieure à 80°C, et l'agitation du mélange dans le réacteur étant obtenue par une hélice tournant à la vitesse de 300 à 1000 tours par minute,
- on filtre, on lave et on sèche les particules du précipité ainsi obtenu.

La température du réacteur est stabilisée à une valeur voisine de 80°C à 85°C.

Selon un premier mode de réalisation la proportion de cobalt est de l'ordre de 2% et celle du cadmium de 10% en poids par rapport à l'ensemble des métaux contenus dans ladite solution ; le sel d'ammonium est alors ajouté de manière que le rapport ions ammonium/ions nickel soit de l'ordre de 0,3.

Selon un second mode de réalisation, la proportion de cobalt est de l'ordre de 6% à 8% et celle du cadmium de 10% en poids par rapport à l'ensemble des métaux contenus dans ladite solution ; le sel d'ammonium est alors ajouté de manière que le rapport ions ammonium/ions nickel soit de l'ordre de 0,6.

On a trouvé que, lorsque l'on introduit le sel d'ammonium dans les conditions précédentes, la formation des complexes solubles avec les ions métalliques a pour effet de diminuer la sursaturation au voisinage des particules. De plus, du point de vue industriel, cet ajout rend possible une autorégulation du pH par la création d'un effet tampon entre les espèces $NH_4^+$ et $NH_3$.

Le procédé selon l'invention agit sur les caractéristiques physiques des particules au moment même de leur formation, c'est-à-dire au cours même de la précipitation.

Grâce à la mise en oeuvre de l'ensemble des conditions précisées ci-dessus, il est possible d'obtenir des particules facilement filtrables, de haute densité apparente, de granulométrie centrée, et dotées d'un bon pouvoir de coulabilité grâce à une croissance cristalline maîtrisée. Ces poudres ont des caractéristiques optimisées pour une utilisation directe comme matière active pour électrode de générateur électrochimique à électrolyte alcalin.

D'autres caractéristiques et avantages de la présente invention apparaîtront au cours de la description suivante d'un mode de réalisation donné à titre illustratif, mais nullement limitatif.

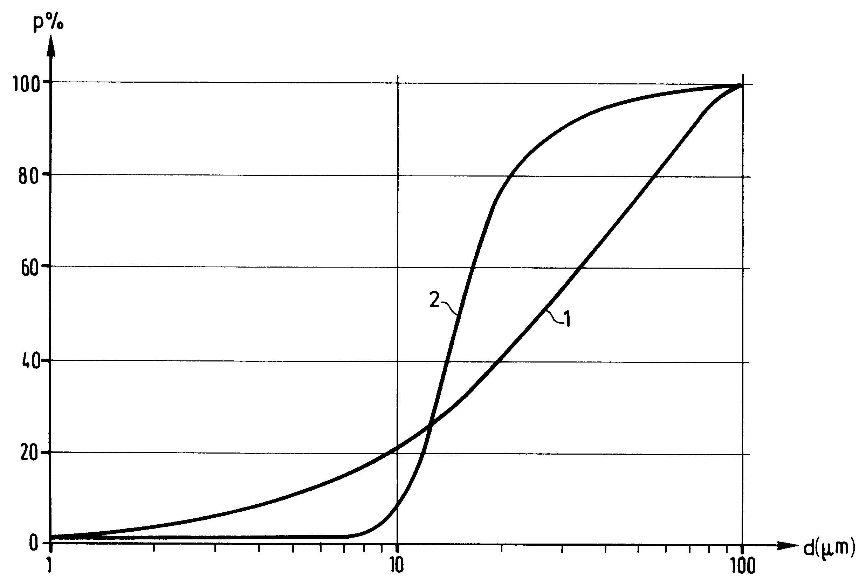

Dans la figure unique annexée apparaissent les courbes de granulométrie d'une poudre d'hydroxyde de nickel obtenue par un procédé de l'art antérieur et d'une poudre obtenue par le procédé selon l'invention. Les poids p cumulés (en %) de la poudre ont été notés en ordonnées et les diamètres équivalents des grains de la poudre (en microns) ont été notés en abscisses.

Le procédé de l'art antérieur consiste à verser rapidement une solution aqueuse de sulfate de nickel à la concentration de 1M et à la température de 95°C, dans une solution aqueuse de soude à la concentration de 3M chauffée à 90°C. Les fines particules qui résultent de la précipitation sont filtrées, séchées, lavées puis broyées.

Les caractéristiques physiques de cette poudre sont les suivantes :
- densité apparente non tapée mesurée à l'aide de l'appareil de Hall et Carney : 0,9.
- granulométrie dispersée, comme cela apparaît sur la courbe 1 de la figure annexée.
- angle de repos mesuré selon la technique dite du cône à base fixe : 60 degrés; cette forte valeur témoigne d'une morphologie irrégulière des particules.

Selon un premier exemple de mise en oeuvre du procédé selon l'invention, on introduit dans un réacteur de contenance un litre :
- Une solution aqueuse de nitrates de nickel, de cobalt et de cadmium avec les concentrations suivantes (en poids de métal)

$$\cdot \frac{Co}{\Sigma (Ni + Cd + Co)} = 2\%$$

$$\cdot \frac{Cd}{\Sigma (Ni + Cd + Co)} = 10\%$$

La vitesse d'introduction de cette solution dans le réacteur est de 0,8 ml par minute.
- Une solution aqueuse de $NH_4NO_3$ de concentration voisine de 50g/litre à la vitesse de 0,8 ml/minute.
- Une solution de soude de concentration voisine de 2M avec un débit de l'ordre de 1,6 ml/minute régulée de manière à conserver un pH proche de la valeur 9,2.

La température est maintenue à 85°C et le milieu est agité au moyen d'une hélice à trois pales, dont le diamètre est d'environ la moitié du diamètre du réacteur et dont la vitesse de rotation est de 600 tours par minute.

Après filtration, lavage et séchage on obtient une poudre d'hydroxyde ternaire de nickel, cobalt et cadmium, ayant les caractéristiques suivantes :
- densité apparente non tapée mesurée à l'aide de l'appareil de Hall et Carney : supérieure à 1,5.
- granulométrie centrée, autour de 20 $\mu$m, comme le montre la courbe 2 de la figure annexée.
- angle de repos mesuré selon la technique dite du cône à base fixe : 27 degrés; cette faible valeur d'angle de repos témoigne de la forme arrondie des particules.
- surface spécifique de l'ordre de 12 m²/g.

Cette poudre est directement utilisable comme matière active positive dans les électrodes des accumulateurs alcalins.

Selon un second exemple de réalisation le nitrate de cadmium est remplacé en totalité par du nitrate de zinc, toutes les autres conditions de l'exemple 1 étant inchangées.

Selon un troisième exemple de réalisation, le nitrate de cadmium est remplacé en partie par du nitrate de zinc, la proportion totale en poids de cadmium et de zinc étant équivalente à la proportion de cadmium du premier exemple.

Selon un quatrième exemple de mise en oeuvre du procédé selon l'invention, la proportion de cobalt n'est plus de 2% mais de 8%. Toutes les conditions opératoires sont les mêmes que celles du premier exemple, sauf en ce qui concerne la concentration du nitrate d'ammonium qui passe à 100g/l.

La poudre obtenue a les mêmes caractéristiques que la poudre de l'exemple 1.

## Revendications

1. Procédé de préparation d'une poudre d'hydroxydes métalliques à base d'hydroxyde de nickel pour électrode de générateur électrochimique à électrolyte alcalin, caractérisé par le fait que :
   - on introduit dans un réacteur, simultanément et de manière continue :
     . une solution de nitrates ou de sulfates de nickel, de cobalt, de cadmium et/ou de zinc, la proportion de cobalt étant comprise entre 1% et 8% en poids par rapport à l'ensemble des métaux présents dans ladite solution, la proportion de cadmium et/ou de zinc étant de l'ordre de 3% à 10%,
     . un sel d'ammonium, de manière que le rapport ions ammonium/ions nickel soit compris entre 0,3 et 0,6,
     . une base forte de manière que la valeur du pH soit stabilisée à la valeur de 9,2 ± 0,1,
     la température du réacteur étant maintenue à une valeur supérieure à 80°C, et l'agitation du mélange dans le réacteur étant obtenue par une hélice tournant à la vitesse de 300 à 1000 tours par minute,
   - on filtre, on lave et on sèche les particules du précipité ainsi obtenu.

2. Procédé de préparation selon la revendication 1, caractérisé par le fait que la proportion de cobalt est de l'ordre de 2% et celle du cadmium de l'ordre de 10% en poids par rapport à l'ensemble des métaux contenus dans ladite solution, et que ledit sel d'ammonium est ajouté de manière que le rapport ions ammonium/ions nickel soit de l'odre de 0,3.

3. Procédé de préparation selon la revendication 1, caractérisé par le fait que la proportion de cobalt est de l'ordre de 6% à 8% et celle du cadmium de l'ordre de 10% en poids par rapport à l'ensemble des métaux contenus dans ladite solution, et que ledit sel d'ammonium est ajouté de manière que le rapport ions ammonium/ions nickel soit de l'ordre de 0,6.

4. Procédé de préparation selon l'une des revendications précédentes, caractérisé par le fait que la température du réacteur est stabilisée à une valeur voisine de 80°C à 85°C.

5. Procédé de préparation selon l'une des revendications précédentes, caractérisé par le fait que ladite hélice comporte trois pales et que son diamètre est environ la moitié de celui dudit réacteur.

## Patentansprüche

1. Verfahren zur Herstellung eines Pulvers aus metallischen Hydroxyden auf der Basis von Nickelhydroxyd für eine Elektrode eines elektrochemischen Generators mit alkalischem Elektrolyten, dadurch gekennzeichnet, daß
   - in einen Reaktor gleichzeitig und kontinuierlich eingebracht wird:
     . eine Lösung von Nitraten oder Sulfaten von Nickel, von Kobalt, Kadmium und/oder Zink, wobei der Kobaltanteil zwischen 1 und 8 Gew.% in Bezug auf die Gesamtheit der in dieser Lösung vorhandenen Metalle liegt und der Anteil von Kadmium und/oder Zink etwa 3% bis 10% beträgt,
     . ein Ammoniumsalz, derart, daß das Verhältnis von Ammoniumionen/Nickelionen zwischen 0,3 und 0,6 liegt,
     . eine starke Lauge, derart, daß der pH-Wert auf den Wert von 9,2 ± 0,1 stabilisiert ist,
     wobei die Temperatur des Reaktors auf einem Wert von oberhalb 80°C gehalten wird und das Umrühren der Mischung im Reaktor durch eine Schraube erfolgt, die mit einer Geschwindigkeit von 300 bis 1000 Umdrehungen pro Minute dreht,
   - und wobei die Partikel der so erhaltenen Ausfällung gefiltert, gewaschen und getrocknet werden.

2. Herstellungsverfahren nach Anspruch 1, dadurch gekennzeichnet, daß der Kobaltanteil etwa 2% und der des Kadmium 10 Gew.% der Gesamtheit der in dieser Lösung enthaltenen Metalle beträgt und daß das Ammoniumsalz dann derart zugefügt wird, daß das Verhältnis Ammoniumionen/Nickelionen etwa 0,3 beträgt.

3. Herstellungsverfahren nach Anspruch 1, dadurch gekennzeichnet, daß der Kobaltanteil 6% bis 8% und der des Kadmium 10 Gew.% der Gesamtheit der in dieser Lösung enthaltenen Metalle beträgt und daß das Ammoniumsalz dann derart zugefügt wird, daß das Verhältnis Ammoniumionen/Nickelionen etwa 0,6 beträgt.

4. Herstellungsverfahren nach einem beliebigen der vorhergehenden Ansprüche, dadurch gekennzeichnet, daß die Temperatur des Reaktors auf einem Wert nahe 80°C bis 85°C stabilisiert wird.

5. Herstellungsverfahren nach einem der vorhergehenden Ansprüche, dadurch gekennzeichnet, daß die Schraube drei Flügel aufweist und daß ihr Durchmesser etwa die Hälfte des Durchmessers des Reaktors beträgt.

**Claims**

1. Process for preparation of a metal hydroxide powder based on nickel hydroxide for alkaline electrolyte electrochemical generator electrodes characterised in that:
   - the following are placed simultaneously and continuously into a reactor:
     . a solution of nickel, cobalt, cadmium and/or zinc nitrates or sulphates, the proportion of cobalt being between 1% and 8% by weight relative to all the metals present in said solution, the proportion of cadmium and/or zinc being in the order of 3% to 10%,
     . an ammonium salt such that the ratio of ammonium ions to nickel ions is between 0.3 and 0.6, and
     . a strong base such that the pH is stabilised at a value of $9.2 \pm 0.1$,
     the reactor temperature being kept above 80°C and the mixture in the reactor being stirred by a screw rotating at 300 revolutions per minute to 1 000 revolutions per minute, and
   - the particles of the precipitate obtained are filtered, washed and dried.

2. Preparation process according to claim 1 characterised in that the proportion of cobalt is in the order of 2% and that of cadmium in the order of 10% by weight relative to all the metals contained in said solution and in that said ammonium salt is added in such a way that the ratio of ammonium ions to nickel ions is in the order of 0.3.

3. Preparation process according to claim 1 characterised in that the proportion of cobalt is in the order of 6% to 8% and that of cadmium in the order of 10% by weight relative to all the metals contained in said solution and in that said ammonium salt is added in such a way that the ratio of ammonium ions to nickel ions is in the order of 0.6.

4. Preparation process according to any one of the preceding claims characterised in that the reactor temperature is stabilised at a value around 80°C to 85°C.

5. Preparation process according to any one of the preceding claims characterised in that said screw has three blades and in that its diameter is approximately half that of said reactor.